# EUROPEAN PATENT APPLICATION

(11) **EP 3 598 368 A1**
(43) Date of publication of application: **22.01.2020**
(21) Application number: 17847703.0
(22) Date of filing: 26.06.2017
(51) Int. Cl.: G06Q 20/40

(54) **FINANCIAL TRANSACTION MANAGEMENT SYSTEM, METHOD, STORAGE MEDIUM AND SERVER**

(30) Priority: 14.03.2017 CN 201710149696
(71) Applicant: Ping An Technology (Shenzhen) Co., Ltd., Shenzhen, Guangdong 518000 (CN)
(72) Inventor: LIU, Xing, Shenzhen Guangdong 518000 (CN); JIANG, Bo, Shenzhen Guangdong 518000 (CN); HU, Kaihao, Shenzhen Guangdong 518000 (CN); QIU, Yi, Shenzhen Guangdong 518000 (CN)
(74) Representative: dompatent von Kreisler Selting Werner - Partnerschaft von Patent- und Rechtsanwälten mbB
(86) International application number: PCT/CN2017/090050
(87) International publication number: WO 2018/166100

(57) **Abstract**

A financial transaction management, method, storage medium and server, the server comprise a client terminal and a server, the client terminal is configured to receive an account login request inputted by a user, and transmit the account login request to the server; the server is configured to receive the account login request, and judge whether there exists a dedicated account corresponding to the dedicated account ID, and transmit a first control signal to the client terminal when there exists the dedicated account; the client terminal is further configured to receive the first control signal and enter a dedicated account interface according to the first control signal, receive a first transaction request inputted by the user and transmit the first transaction request to the server; the first transaction request includes the dedicated account information and transaction information associated with the dedicated account ID; the server is further configured to receive the first transaction request, and accomplish a transaction based on the first transaction request. There is no need for the financial transaction management system to login the dedicated account interface through the dedicated account and perform a transaction, an operation process of the financial transaction management system is easy and convenient.

## Description

### THCHNICAL FIELD

The present invention relates to the technical field of information processing, and particularly relates to a financial transaction management system, a method, a storage medium and a server.

### BACKGROUND

With the development of financial industry, a financial institution provides a client with various financial businesses, these financial businesses include but are not limited to savings, loans, fund, securities, group entrusting, capital management, insurance and financial management, etc. Currently, when the financial mechanism provides the client with a financial business, the client needs to open a dedicated account corresponding to the financial business, and then perform a financial business corresponding to the dedicated account. That is, when the client performs the financial business, the client needs to perform an account opening operation for the dedicated account including a savings account, a loans account, a fund account, a security account, a group entrusting account, a capital management account, an insurance account and a financial management account according to a business requirement thereof, and then perform a transaction based on the dedicated account. Information is independent from each other among different dedicated accounts, when the client performs account opening for multiple dedicated accounts, he/she needs to upload the client's account opening information repeatedly, an account opening efficiency is low and time spent on account opening is long. Moreover, the client can only accomplish the corresponding financial transaction on a dedicated account transaction interface based on the dedicated account, when there are many dedicated accounts, the client is prone to be confused of account names and account passcodes of the dedicated accounts, such that the client couldn't accomplish the transaction of the corresponding financial business based on the dedicated accounts, and thus a property damage of the client is prone to be caused.

### TECHNICAL PROBLEM

The present invention provides a financial transaction management system, method, storage medium and server, which aims at solving problems in the related art that information is independent from each other among different dedicated accounts, and confusion is prone to occur under a condition of many dedicated accounts.

### TECHNICAL SOLUTION

The technical solutions adopted by the present invention for solving the technical problem are:
In a first aspect, the present invention provides a financial transaction management system comprising a client terminal and a server; wherein:
   the client terminal is configured to receive an account login request inputted by a user, and transmit the account login request to the server; wherein the account login request comprises common account information and a dedicated account ID;
   the server is configured to receive the account login request, and judge whether there exists a dedicated account corresponding to the dedicated account ID, and transmit a first control signal to the client terminal when there exists the dedicated account;
   the client terminal is further configured to receive the first control signal and enter a dedicated account interface according to the first control signal, receive a first transaction request inputted by the user and transmit the first transaction request to the server; the first transaction request includes the dedicated account information and transaction information associated with the dedicated account ID;
   the server is further configured to receive the first transaction request, and accomplish a transaction based on the first transaction request.
In a second aspect, the present invention further provides a financial transaction management method comprising:
   by a client terminal, receiving an account login request inputted by a user, and transmitting the account login request to a server; wherein the account login request comprises common account information and dedicated account ID;
   by the server, receiving the account login request, and judging whether there exists a dedicated account corresponding to the dedicated account ID, and transmitting a first control signal to the client terminal when there exists the dedicated account;
   by the client terminal, receiving the first control signal and entering a dedicated account interface according to the first control signal, receiving a first transaction request inputted by the user and transmitting the first transaction request to the server; wherein the first transaction request includes the dedicated account information and transaction information associated with the dedicated account ID; and
   by the server, receiving the first transaction request, and accomplishing a transaction based on the first transaction request.
In a third aspect, the present invention provides a server comprising a storage device, a processor and computer program stored in the storage device and executable by the processor, the processor is configured to implement the steps executed by the server in the financial transaction management method when executing the computer program.
In a fourth aspect, the present invention provides a computer readable storage medium which stores computer program, when the computer program is executed by a processor, the steps executed by the server in the aforesaid financial transaction management method are implemented.

### ADVANTAGEOUS EFFECTS

Compared with the related art, the present invention has following advantages: in the financial transaction management system and method provided by the present invention, the account login request transmitted by the user to the server through the client terminal includes the common account information and the dedicated account ID, when the server stores the dedicated account corresponding to the dedicated account ID, the first control signal is transmitted to the client terminal, such that the client terminal can enter the dedicated account interface and accomplish the transaction on the dedicated account interface based on the first transaction request, there is no need to login the dedicated account interface through the dedicated account additionally and perform the transaction, an operation process is simple and convenient, and a situation of forgetting the dedicated account information or obfuscating different dedicated account information can be avoided from occurring effectively.

### BRIEF DESCRIPTION OF THE DRAWINGS

The present invention will be further described in detail with reference to accompanying figures and embodiments below, in the accompanying figures:
FIG.l illustrates a principle block diagram of a financial transaction management system in embodiment one of the present invention;
FIG. 2 illustrates a flow chart of a financial transaction management system in embodiment two of the present invention;
FIG. 3 illustrates a schematic view of a server provided by one embodiment of the present invention.

### ILLUSTRATIVE EMBODIMENTS

In order to make technical features, purpose, and advantages of the present invention be understandable more clearly, specific embodiments of the present invention are described in detail with reference to accompanying figures currently.

### Embodiment I

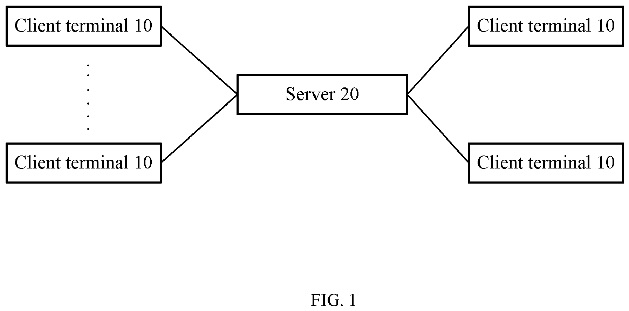

FIG. 1 illustrates a financial transaction management system. The financial transaction management system can be applied in financial mechanisms, and configured to integrate financial management systems such as a savings system, a loan system, a fund system, security system, a group entrusting system, a capital management system, an insurance system and a financial management system, etc., thereby achieving information interconnection among multiple management systems. As shown in FIG. 1, the financial transaction management system comprises a client terminal 10 and a server 20. Wherein, the client terminal 10 can be connected in communication with the server 20 through a wireless network such as Wi-Fi network, 3G network, 4G network, or a wired network. The client terminal includes but is not limited to an intelligent terminal such as a computer, a smartphone, a PAD, etc.

The client terminal 10 is configured to receive an account login request inputted by a user, and transmit the account login request to the server20. The account login request includes common account information and a dedicated account ID (Identity). The common account information includes a common account, a common account passcode, a verification code, etc.; wherein, the common account and the common account passcode are the account and the passcode opened by the user in the financial transaction management system in advance. Generally speaking, the common account is associated with an identity number of the user. The verification code is generated randomly in a login process, and can either be verified by a cellphone, or be generated by the client terminal 10 independently. In this embodiment, the user needs to accomplish an account opening operation in a financial transaction management system in advance, it not only needs to fill in user information such as a user name, an identity number, a mailbox, a telephone, etc., but also needs to set the common account information such as the common account, the common account passcode, etc., in an account opening process, and associate the common account information with the dedicated account, such that when the user inputs the account login request, he/she can select which type of financial transaction is to be performed.

The dedicated account ID is associated with the dedicated account, and is configured to be directed to a type of financial transaction which is to be performed by the user. When the financial transaction is performed, the user can login a common account interface based on the common account information, types of financial transactions which can be selected to be performed are set in the common account interface, such as various financial transaction types including savings, loans, fund, security, group entrusting, capital management, insurance, and financial management . When the user selects any one of the financial transaction types, he/she can input a corresponding dedicated account ID. In an embodiment, the user can click a selecting button corresponding to any one of the financial transaction types so as to input a corresponding account login request, this account login request includes the dedicated account ID corresponding to the financial transaction. It can be understood that, the user can click selecting buttons corresponding to different financial transaction types so as to input different account login requests, and then perform a transaction based on the different account login requests.

The server 20 is configured to receive the account login request, and judge whether there exists a dedicated account corresponding to the dedicated account ID; a first control signal is transmitted to the client terminal 10 if there exists the dedicated account; a second control signal is transmitted to the client terminal 10 if there doesn't exist the dedicated account. Wherein, the first control signal is the one that controls the client terminal 10 to enter the dedicated account interface, the second control signal is the one that control the client terminal 10 to enter the common account interface. The dedicated account includes but is not limited to a savings account, a loans account, a fund account, a security account, a group entrusting account, a capital management account, an insurance account and a financial management account corresponding to the dedicated account ID. The dedicated account is associated with the common account through the user information including the user name, the identity number, the mailbox, the telephone, the dedicated account can either be the same as or different with the common account.

In an embodiment, the client terminal 10 is further configured to receive the first control signal and enter the dedicated account interface according to the first control signal, receive a first transaction request inputted by the user and transmit the first transaction request to the server 20. The first transaction request includes the dedicated account information and transaction information associated with the dedicated account ID. Wherein the dedicated account information includes the dedicated account and the dedicated account passcode, the dedicated account and the dedicated account passcode are generated by associating the common account information with the dedicated account ID, the user need not to input independently, in this way, the user can be avoided from obfuscating the corresponding dedicated account information, and from continuously inputting relevant dedicated accounts wrongly, thereby incurring a failure to enter the dedicated account interface. The transaction information associated with the dedicated account ID can include information such as a product ID, a product name, transaction amount, and transaction volume, etc. Wherein, the product ID is a code which is set according to a preset coding rule, can be used for identifying different transaction products for facilitating performing financial transactions; for example, in security accounts, the product ID is a stock code, in fund transactions, the product ID is a fund code, and so on.

Furthermore, an account association table is pre-stored in a user database of the server 20, and user account association information is stored in the account association table, each of the user account association information includes common account information and dedicated account information associated with the dedicated account ID. When receiving the account login request uploaded by the client terminal 20, the server 20 searches for corresponding user account association information based on the common account information in the account login request, and then searches for corresponding dedicated account information based on the dedicated account ID in the account login request; if there exists the corresponding dedicated account information, the first control signal is transmitted to the client terminal 10, so that the client terminal 20 can enter the dedicated account interface; if there doesn't exist the corresponding dedicated account information, the second control signal is transmitted to the client terminal 10, so that the client terminal 10 can enter the common account interface.

The server 20 is further configured to receive a first transaction request and accomplish a transaction based on the first transaction request. The server 20 enters the financial management system (which includes but is not limited to the savings system, the loans system, the fund system, the security system, the group entrusting system, the capital management system, the insurance system, and the financial management system) corresponding to the dedicated account and based on the dedicated account information, and accomplish the transaction based on transaction information associated with the dedicated account ID (including but not limited to the information such as the product ID, the product name, the transaction amount and the transaction volume, and so on).

It can be understood that, the account login request transmitted by the user through the client terminal 10 to the server 20 includes the common account information and the dedicated account ID, when there exists the dedicated account corresponding to the dedicated account ID, the server 20 transmits the first control signal to the client terminal 10, such that the client terminal 10 can directly enter the dedicated account interface corresponding to the dedicated account ID, the transaction process which is performed on the dedicated account interface is the same with the process of by the user, performing login of the corresponding financial management process through the dedicated account information, and is based on the same process of performing the transaction based on the first transaction request. It can be understood that, in the financial transaction management system, the user only needs to remember the common account information and select the dedicated account type to be performed on the common account interface, and determine the corresponding dedicated account ID so as to input the corresponding account login request; under the condition that there exists the dedicated account information corresponding to the dedicated account ID, it is possible to login the dedicated account interface directly, the operation process is simple and convenient, and a financial risk of forgetting or obfuscating the dedicated account information can be avoided.

In another specific embodiment, the client terminal 10 is configured to receive a second control signal and enter the common account interface according to the second control signal, receive a second transaction request inputted by the user and transmit the second transaction request to the server 20; the second transaction request includes the common account information and the transaction information associated with the dedicated account ID. The transaction information associated with the dedicated account ID can include information such as the produce ID, the product name, the product amount, and the product number, etc. Wherein, the product ID is a code that is set according to a preset coding rule, and can be used for identifying different transaction products, thereby facilitating performing financial transactions; for example, in security accounts, the product ID is a stock code, in fund transactions, the product ID is a fund code, and so on.

The server 20 is configured to receive the second transaction request and accomplish the transaction based on the second transaction request. The server 20 enters the management system (which includes but is not limited to the savings system, the loans system, the fund system, the security system, the group entrusting system, the capital management system, the insurance system, and the financial management system) corresponding to the dedicated account and based on the dedicated account information, and accomplish the transaction based on transaction information associated with the dedicated account ID (including but not limited to the information such as the product ID, the product name, the transaction amount and the transaction volume, and so on).

It can be understood that, the account login request transmitted by the user through the client terminal 10 to the server 20 includes the common account information and the dedicated account ID, the server 20 is configured to, when there doesn't exist the dedicated account corresponding to the dedicated account ID, transmit the second control signal to the client terminal 10, such that the client terminal 10 can enter the common account interface and accomplish the second transaction request based on the second transaction request directly on the common account interface, transactions of any financial business can be implemented on the common account interface without accomplishing account opening operations of a plurality of dedicated accounts in advance, such that a problem of low efficiency and long time-consuming due to repeated account opening of multiple dedicated accounts can be avoided from occurring.

Furthermore, a process of accomplishing the transaction based on the second transaction request by the server 20 comprises:
judging whether a product corresponding to the product ID in the second transaction request is a dedicated product. Wherein, the second transaction request is the one that is inputted on the common account interface. The transaction information associated with the dedicated account ID in the second transaction request can include the information such as the product ID, the product name, the transaction amount and the transaction volume, etc. Wherein, the product ID is used for defining a product attribute, the product attribute can be, such as savings, loans, fund, security, group entrusting, capital management, insurance and financial management. The dedicated product is referred to as a product that belongs to a certain dedicated account, for subscribing the dedicated product, it needs to provide a corresponding qualification certificate documents.

Judging whether the qualification certificate documents corresponding to the dedicated product are stored if the product corresponding to the product ID is the dedicated product,. It can be understood that, the qualification certificate documents corresponding to the dedicated product can be the one uploaded to the server 20 along with the common account information, and stored in the user database when the user performs an account opening in the financial transaction management system, or be, when the user imports some other dedicated account into the financial transaction management system, the one imported into the user database by the dedicated account.

If there doesn't exist the qualification certificate documents, transmitting a supplementary document instruction to the client terminal 10, receiving the qualification certificate documents uploaded by the client terminal 10 based on the supplementary document instruction, and accomplishing the transaction corresponding to the second transaction request based on the common account information. It can be understood that, if the product corresponding to the product ID in the second transaction request is the dedicated product, and there doesn't exist the qualification certificate documents corresponding to the dedicated product, the supplementary document instruction is transmitted to the client terminal 10; the user can transmit the corresponding qualification certificate documents to the server 20 through the client terminal 10 based on the supplementary document instruction displayed by the client terminal 10; the server 20 can accomplish the transaction of the dedicated product based on the second transaction request after receiving the qualification certificate documents and accomplishing a verification of the qualification certificate documents, there is no need to accomplish an account opening of the dedicated account corresponding to the dedicated product, the transaction can still be performed, an account opening time-consuming can be saved effectively, and a transaction operation can be simplified, too. It can be understood that, the server 20 stores the qualification certificate documents uploaded by the user based on the supplementary document instruction in the user database, when the user performs a subsequent financial transaction, he/she can invoke the qualification certificate documents directly, so that a client can accomplish the transaction of the dedicated product corresponding to the required same qualification certificate documents.

Accomplishing transaction corresponding to the second transaction request based on the common account information if there exists the qualification certificate document or the product corresponding to the product ID isn't the dedicated product. It can be understood that, if the product corresponding to the product ID in the second transaction request isn't the dedicated product, there is no need to obtain the corresponding qualification certificate documents; when the transaction is performed based on the second transaction request, the transaction can be accomplished based on the common account information. If the product corresponding to the product ID in the second transaction request is the dedicated product, and the qualification certificate documents corresponding to the dedicated product are stored, there is no need to upload the qualification certificate documents additionally, the transaction can be accomplished directly based on the common account information, the transaction can be performed without accomplishing the account opening of the dedicated account corresponding to the dedicated product previously, time spent on the account opening can be saved effectively, and a transaction operation can be simplified.

In a financial transaction management system provided by a specific embodiment, the client terminal 10 is configured to receive an account opening request inputted by the user, and transmit the account opening request to the server 20. The account opening request includes the common account information and the qualification certificate documents corresponding to the common account information. Wherein, the common account information includes the common account and the common account passcode; it can be understood that, in the account opening process, it still needs to store identity information used for solely identifying the identity of the user such as the user name, the identity number, the mailbox, the telephone, and so on in association with the common account information, in this way, when the user forgets the common account information, he/she can find the common account and/or common account passcode based on the identity information. In this embodiment, the qualification certificate documents include the document used for certifying identity information such as a scanned document of an identity card, etc.

The server 20 is configured to receive the account opening request, and store the account opening request (including the common account information and the corresponding qualification certificate documents) in the user database. The server 20 can receive account opening requests inputted by many users, and store account opening request of each of users in the user database, each account opening request is associated with the identity information such as the identity card, when the account opening request is stored in the user database, it is stored based on the identity information such as the identity card, such that an uniqueness of the account opening request is ensured. In an embodiment, when the account opening is performed based on the account opening request, an account association information is established based on the common account information in the account opening request, this account association information is associated with the qualification certificate documents.

It can be understood that, the user transmits the account opening request to the server 20 through the client terminal 10 so as to transmit the common account information and qualification certificate documents, thereby accomplishing the process of account opening based on the common account information; in this way, when the user performs the financial transaction, he/she can login the financial transaction management system based on the common account information and accomplish the transaction. In an embodiment, the common account information consisted of the common account and the common account passcode can be used to login the financial transaction management system, a method of using an identity card number and a mobile phone verification code can also be used to login the financial transaction management system, thereby ensuring a diversity of login of the financial transaction management system, and thereby avoiding a failure to login due to forgetting of the common account information.

In a financial transaction management system provided by another embodiment, the client terminal 10 is also configured to receive the account opening request inputted by the user, and transmit the account opening request to the server 20. Wherein, the account opening request includes the common account information, at least one of the dedicated account information and the qualification certificate documents. Wherein, the common account information includes the common account and the common account passcode. The dedicated account information includes the dedicated account corresponding to the dedicated account ID and the dedicated account passcode. The qualification certificate documents not only include document used for certifying identity information, such as the scanned document of the identity card, but also include the qualification certificate documents that are required for performing a transaction with a product corresponding to the dedicated account ID such as certificate documents used for certifying identity, property, and income of the user, and so on.

The server 20 is further configured to receive the account opening request, and store the account opening request (including the common account information and the corresponding qualification certificate documents) in the user database. The server 20 can receive account opening requests inputted by many users, and store the account opening request in the user database once it receives an account opening request from a user, each account opening request is associated with the identity information such as the identity card; when stored in the user database, the account opening request is stored based on the identity information such as the identity card, such that the uniqueness of the account opening request is ensured. In an embodiment, when the account opening is performed based on the account opening request, an account association information is established based on the common account information in the account opening request, this account association information is stored in association with at least one dedicated account information, and is associated with the qualification certificate documents.

It can be understood that, when the user transmits the account opening request to the server 20 through the client terminal 10 and stores the account opening request in the user database, since the account opening request includes the common account information, at least one dedicated account information and qualification certificate documents, when performing an account opening operation based on the account opening request, the server 20 can accomplish account opening of the common account and at least one of the dedicated account, and can receive account opening of the common account and the dedicated account, such that time spent on account opening can be saved, and an account opening efficiency can be improved.

In a financial transaction management system provided by another embodiment, after the server 20 accomplish account opening of the common account, the user can click the dedicated account adding button in a login interface of the client terminal 10 to enter a dedicated account opening interface, the user can input a dedicated account and a dedicated account passcode on the dedicated account opening interface, and upload the qualification certificate documents corresponding to the dedicated account so as to input a dedicated account opening request. After receiving the dedicated account opening request inputted by the user, the server 10 transmits the dedicated account opening request to the server 20. The server 20 receives the dedicated account opening request and transmits the dedicated account opening request in the user database, thereby accomplishing the account opening of the dedicated account. In this embodiment, when performing the account opening of the dedicated account, there is no need to upload the common account information that is required by the account opening of the common account, and the corresponding qualification certificate documents repeatedly; however, it only needs to input the dedicated account information and the corresponding dedicated qualification certificate documents, the account opening operation process is simple and convenient, an efficiency of account opening of the dedicated account can be improved, and time spent on account opening of multiple accounts can be saved.

In one embodiment, the client terminal 10 is configured to receive an account importing request inputted by the user and transmit the account importing request to the server 20; the account importing request is associated with the common account information, and includes the dedicated account information and the dedicated qualification certificate documents. Wherein, the account importing request is referred to as importing the opened dedicated account information into the financial transaction management system, thereby making the dedicated account information be stored in association with the common account information after the account opening of the dedicated account has been accomplished in advance in the savings system, the loans system, the fund system, the security system, the group entrusting system, the capital management system, the insurance system and the financial management system.

The server 20 is configured to receive the account importing request, and store the account importing request in the user database, such that the dedicated account information can be stored in association with the dedicated qualification certificate documents. The server 20 can receive multiple account importing requests inputted by any user, store the dedicated account information in the multiple account importing requests and the dedicated qualification certificate documents in the user database, and make the common account information be associated with at least one dedicated account information and the dedicated qualification certificate documents corresponding to the at least one common account information.

In this embodiment, the user can input the account importing request into the server 20 through the client terminal 10, such that the dedicated account information in the account importing request and the qualification certificate documents corresponding to the dedicated account information can be stored in the user database, and be stored in association with the common account information in the user database, thereby being able to be directly invoked when a financial transaction is performed. It can be understood that, when the user performs account opening of some other dedicated account through the client terminal 10, there is no need to input the dedicated account information and the dedicated qualification certificate documents corresponding to the dedicated account information repeatedly, which have been inputted into the user database via the account importing request, in this way, time spent on account opening of the dedicated account can be saved effectively, and the efficiency of account opening can be improved.

In a financial transaction management system, if a user A performs an account opening in the financial transaction management system, in the account association table stored in the user database, in the user account association information of a user A, the common account is XXX, the corresponding common account passcode is 000001; and a security dedicated account opened by a client A in a security system in advance is YYY, a corresponding security dedicated account passcode is 000002; a financial management account opened in the financial management system in advance is ZZZ, a corresponding financial management dedicated account passcode is 000003; the security dedicated account YYY and the financial management dedicated account ZZZ, and the common account XXX are associated and stored. Supposing that, in the financial transaction management system, dedicated account IDs corresponding to financial transaction types such as savings, loans, fund, security, group entrusting, capital management, insurance and financial management, and so on are set to be 001, 002, 003, 004, 005, 006, 007 respectively.

Taking a security transaction for example, if user A wants to purchase ten thousand stocks of Ping An bank with the stock code of [000001], the user A can login the financial transaction management system on the client terminal 10 based on the common account information, and transmit the account login request to the server 20 through the client terminal 10, the common account of the account login information is XXX, the common account passcode is 000001, the dedicated account ID is 004. When receiving the account login request, the server 20 searches whether the financial transaction management system stores the security dedicated account corresponding to the dedicated account ID of 004 stored in association with the common account information. Since the account association table of the server 20 stores the security dedicated account YYY associated with the common account XXX, when the server 20 receives the account login request, it can transmit the first control signal to the client terminal, such that the client terminal 10 can enter the security dedicated account interface; by transmitting the first transaction request to the server 20 through the client terminal 10, the server 20 can accomplish a corresponding stock transaction based on the first transaction request.

Taking an insurance purchase for example, if the user A wants to purchase a car loan, the user A can login the financial transaction management system on the client terminal 10 based on the common account information, and transmit the account login request to the server 20 through the client terminal 10, the common account of the account login information is XXX, the common account passcode is 000001, the dedicated account ID is 006. When receiving the account login information, the server 20 searches whether the financial transaction management system stores an insurance dedicated account corresponding to the dedicated account ID of 006 stored in association with the common account information. Since the account association table of the server 20 doesn't store the corresponding insurance dedicated account, thus, when the server 20 receives the account login request, it transmits the second control signal to the client terminal 10, such that the client terminal 10 can enter the common account interface, and accomplish a car loan transaction on the common account interface. In an embodiment, the user can transmit the second transaction request to the server 20 through the client terminal 10 on the common account interface, such that the server 20 can accomplish the corresponding car loan transaction based on the second transaction request.

In the financial transaction management system provided by this embodiment, the server 20 judges whether there exists the dedicated account corresponding to the dedicated account ID so as to determine whether the user has performed the account opening operation of the dedicated account corresponding to the dedicated account ID in advance. The server 20 is further configured to control the client terminal 10 to jump onto the dedicated account interface corresponding to the dedicated account directly when the dedicated account is stored, and accomplish the transaction on the dedicated account interface, such that the user can accomplish the transaction on the client terminal 10 based on the opened dedicated account, there is no need to login the dedicated account interface through the dedicated account, the operation process is simple and convenient, login time of different dedicated accounts can be saved effectively, and the financial risk of failing to login the dedicated account interface so as to perform the transaction timely due to forgetting of the dedicated account and/or the dedicated account passcode can be avoided. The server 20 is further configured to jump onto the common account interface corresponding to the common account when the dedicated account isn't stored in advance, and accomplish the transaction based on the common account interface, there is no need to accomplish account opening operations of multiple dedicated accounts in advance, transactions of financial business can still be accomplished on the common account interface, the problem of low efficiency and long time-consuming due to repeated account opening of multiple dedicated accounts can be avoided from occurring.

### Embodiment II

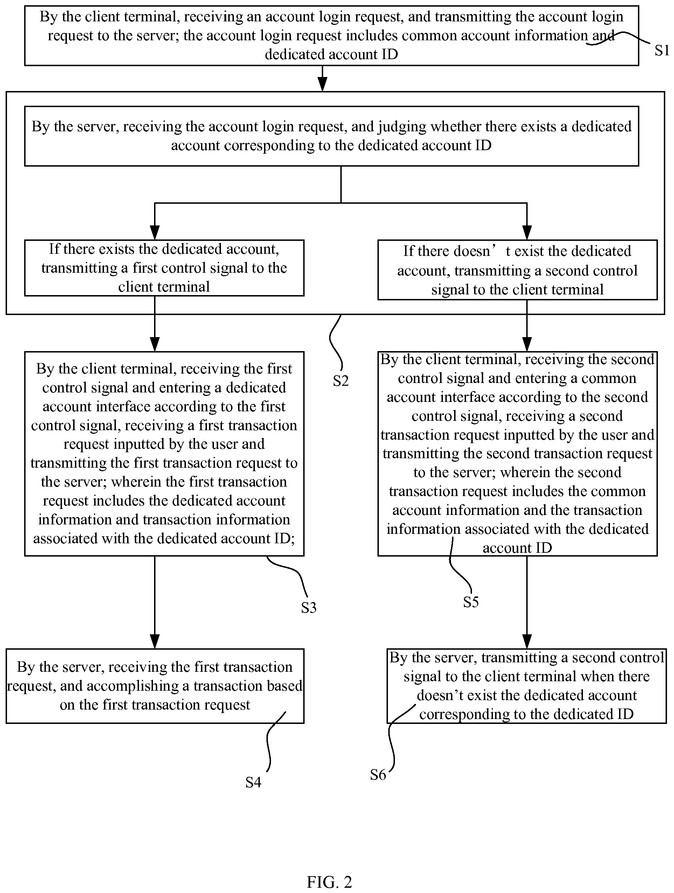

FIG. 2 illustrates a flow chart of a financial transaction management method in embodiment II, the financial transaction management method is applied in a financial transaction management system, the financial transaction management system is applied in a financial mechanism, and is configured to integrate financial management systems such as a savings system, a loan system, a fund system, a security system, a group entrusting system, a capital management system, an insurance system and a financial management system, etc., thereby achieving information interconnection among multiple management systems. As shown in FIG. 1, the financial transaction management system comprises a client terminal 10 and a server 20. Wherein, the client terminal 10 can be connected in communication with the server 20 through a wireless network such as Wi-Fi network, 3G network, 4G network, or a wired network. The client terminal includes but is not limited to an intelligent terminal such as a computer, a smartphone, a PAD, etc. As shown in FIG. 2, the financial transaction management method comprises:
S1: by the client terminal 10, receiving an account login request inputted by a user, and transmitting the account login request to the server20. The account login request includes common account information and a dedicated account ID (Identity). The common account information includes a common account, a common account passcode, a verification code, etc.; wherein, the common account and the common account passcode are the account and the passcode opened by the user in the financial transaction management system in advance. Generally speaking, the common account is associated with an identity number of the user. The verification code is generated randomly in a login process, and can either be verified by a cellphone, or be generated by the client terminal 10 independently. In this embodiment, the user needs to accomplish an account opening operation in a financial transaction management system in advance, it not only needs to fill in user information such as a user name, an identity number, a mailbox, a telephone, etc., but also needs to set the common account information such as the common account, the common account passcode, etc., in an account opening process, and associate the common account information with the dedicated account, such that when the user inputs the account login request, he/she can select which type of financial transaction is to be performed.

The dedicated account ID is associated with the dedicated account, and is configured to be directed to a type of financial transaction which is to be performed by the user. When the financial transaction is performed, the user can login a common account interface based on the common account information, types of financial transactions which can be selected to be performed are set in the common account interface, such as various financial transaction types including savings, loans, fund, security, group entrusting, capital management, insurance, and financial management . When the user selects any one of the financial transaction types, he/she can input a corresponding dedicated account ID. In an embodiment, the user can click a selecting button corresponding to any one of the financial transaction types so as to input a corresponding account login request, this account login request includes the dedicated account ID corresponding to the financial transaction. It can be understood that, the user can click selecting buttons corresponding to different financial transaction types so as to input different account login requests, and then perform a transaction based on the different account login requests.

S2, by the server 20, receiving the account login request, and judging whether there exists a dedicated account corresponding to the dedicated account ID; transmitting a first control signal to the client terminal 10 if there exists the dedicated account; transmitting a second control signal to the client terminal 10 if there doesn't exist the dedicated account. Wherein, the first control signal is the one that controls the client terminal 10 to enter the dedicated account interface, the second control signal is the one that control the client terminal 10 to enter the common account interface. The dedicated account includes but is not limited to a savings account, a loans account, a fund account, a security account, a group entrusting account, a capital management account, an insurance account and a financial management account corresponding to the dedicated account ID. The dedicated account is associated with the common account through the user information including the user name, the identity number, the mailbox, the telephone, the dedicated account can either be the same or different with the common account.

S3, by the client terminal 10, receiving the first control signal and entering the dedicated account interface according to the first control signal, receiving a first transaction request inputted by the user and transmitting the first transaction request to the server 20. The first transaction request includes the dedicated account information and transaction information associated with the dedicated account ID. Wherein the dedicated account information includes the dedicated account and the dedicated account passcode, the dedicated account and the dedicated account passcode are generated by associating the common account information with the dedicated account ID, the user need not to input independently, in this way, the user can be avoided from obfuscating the corresponding dedicated account information, and from continuously inputting relevant dedicated accounts wrongly, thereby incurring a failure to enter the dedicated account interface. The transaction information associated with the dedicated account ID can include information such as a product ID, a product name, transaction amount, and transaction volume, etc. Wherein, the product ID is a code which is set according to a preset coding rule, can be used for identifying different transaction products for facilitating performing financial transactions; for example, in security accounts, the product ID is a stock code, in fund transactions, the product ID is a fund code, and so on.

Furthermore, an account association table is pre-stored in a user database of the server 20, and user account association information is stored in the account association table, each of the user account association information includes common account information and dedicated account information associated with the dedicated account ID. When receiving the account login request uploaded by the client terminal 20, the server 20 searches for corresponding user account association information based on the common account information in the account login request, and then searches for corresponding dedicated account information based on the dedicated account ID in the account login request; if there exists the corresponding dedicated account information, the first control signal is transmitted to the client terminal 10, so that the client terminal 20 can enter the dedicated account interface; if there doesn't exist the corresponding dedicated account information, the second control signal is transmitted to the client terminal 10, so that the client terminal 10 can enter the common account interface.

S4, by the server 20, receiving a first transaction request and accomplishing a transaction based on the first transaction request. The server 20 enters the financial management system (which includes but is not limited to the savings system, the loans system, the fund system, the security system, the group entrusting system, the capital management system, the insurance system, and the financial management system) corresponding to the dedicated account and based on the dedicated account information, and accomplish the transaction based on transaction information associated with the dedicated account ID (including but not limited to the information such as the product ID, the product name, the transaction amount and the transaction volume, and so on).

It can be understood that, the account login request transmitted by the user through the client terminal 10 to the server 20 includes the common account information and the dedicated account ID, when there exists the dedicated account corresponding to the dedicated account ID, the server 20 transmits the first control signal to the client terminal 10, such that the client terminal 10 can directly enter the dedicated account interface corresponding to the dedicated account ID, the transaction process which is performed on the dedicated account interface is the same with the process of by the user, performing login of the corresponding financial management process through the dedicated account information, and is based on the same process of performing the transaction based on the first transaction request. It can be understood that, in the financial transaction management system, the user only needs to remember the common account information and select the dedicated account type to be performed on the common account interface, and determine the corresponding dedicated account ID so as to input the corresponding account login request; under the condition that there exists the dedicated account information corresponding to the dedicated account ID, it is possible to login the dedicated account interface directly, the operation process is simple and convenient, and a financial risk of forgetting or obfuscating the dedicated account information can be avoided.
S5, by the client terminal 10, receiving a second control signal and entering the common account interface according to the second control signal, receiving a second transaction request inputted by the user and transmitting the second transaction request to the server 20. The second transaction request includes the common account information and the transaction information associated with the dedicated account ID. The transaction information associated with the dedicated account ID can include information such as the produce ID, the product name, the product amount, and the product number, etc. Wherein, the product ID is a code that is set according to a preset coding rule, and can be used for identifying different transaction products, thereby facilitating performing financial transactions; for example, in security accounts, the product ID is a stock code, in fund transactions, the product ID is a fund code, and so on.
S6, by the server 20, receiving the second transaction request and accomplishing the transaction based on the second transaction request. The server 20 enters the management system (which includes but is not limited to the savings system, the loans system, the fund system, the security system, the group entrusting system, the capital management system, the insurance system, and the financial management system) corresponding to the dedicated account and based on the dedicated account information, and accomplish the transaction based on transaction information associated with the dedicated account ID (including but not limited to the information such as the product ID, the product name, the transaction amount and the transaction volume, and so on).

It can be understood that, the account login request transmitted by the user through the client terminal 10 to the server 20 includes the common account information and the dedicated account ID, the server 20 is configured to, when there doesn't exist the dedicated account corresponding to the dedicated account ID, transmit the second control signal to the client terminal 10, such that the client terminal 10 can enter the common account interface and accomplish the second transaction request based on the second transaction request directly on the common account interface, transactions of any financial business can be implemented on the common account interface without accomplishing account opening operations of a plurality of dedicated accounts in advance, such that problems of low efficiency and long time-consuming due to repeated account opening of multiple dedicated accounts can be avoided from occurring.

Furthermore, step S6 comprises following steps:
S61: judging whether a product corresponding to the product ID in the second transaction request is a dedicated product. Wherein, the second transaction request is the one that is inputted on the common account interface. The transaction information associated with the dedicated account ID in the second transaction request can include the information such as the product ID, the product name, the transaction amount and the transaction volume, etc. Wherein, the product ID is used for defining a product attribute, the product attribute can be, such as savings, loans, fund, security, group entrusting, capital management, insurance and financial management. The dedicated product is referred to as a product that belongs to a certain dedicated account, for subscribing the dedicated product, it needs to provide a corresponding qualification certificate documents.
S62: judging whether the qualification certificate documents corresponding to the dedicated product are stored if the product corresponding to the product ID is the dedicated product. It can be understood that, the qualification certificate documents corresponding to the dedicated product can be the one uploaded to the server 20 along with the common account information, and stored in the user database when the user performs an account opening in the financial transaction management system, or be, when the user imports some other dedicated account into the financial transaction management system, the one imported into the user database by the dedicated account.
S63: if there doesn't exist the qualification certificate documents, transmitting a supplementary document instruction to the client terminal 10, receiving the qualification certificate documents uploaded by the client terminal 10 based on the supplementary document instruction, and accomplishing the transaction corresponding to the second transaction request based on the common account information. It can be understood that, if the product corresponding to the product ID in the second transaction request is the dedicated product, and there doesn't exist the qualification certificate documents corresponding to the dedicated product, the supplementary document instruction is transmitted to the client terminal 10; the user can transmit the corresponding qualification certificate documents to the server 20 through the client terminal 10 based on the supplementary document instruction displayed by the client terminal 10; the server 20 can accomplish the transaction of the dedicated product based on the second transaction request after receiving the qualification certificate documents and accomplishing a verification of the qualification certificate documents, there is no need to accomplish an account opening of the dedicated account corresponding to the dedicated product, the transaction can still be performed, time spent on account opening can be saved effectively, and a transaction operation can be simplified, too. It can be understood that, the server 20 stores the qualification certificate documents uploaded by the user based on the supplementary document instruction in the user database, when the user performs a subsequent financial transaction, he/she can invoke the qualification certificate documents directly, so that a client can accomplish the transaction of the dedicated product corresponding to the required same qualification certificate documents.
S64, accomplishing the transaction corresponding to the second transaction request based on the common account information if there exists the qualification certificate document, or the product corresponding to the product ID isn't the dedicated product. It can be understood that, if the product corresponding to the product ID in the second transaction request isn't the dedicated product, there is no need to obtain the corresponding qualification certificate documents; when the transaction is performed based on the second transaction request, the transaction can be accomplished based on the common account information. If the product corresponding to the product ID in the second transaction request is the dedicated product, and the qualification certificate documents corresponding to the dedicated product are stored, there is no need to upload the qualification certificate documents additionally, the transaction can be accomplished directly based on the common account information, the transaction can be performed without accomplishing the account opening of the dedicated account corresponding to the dedicated product previously, time spent on the account opening can be saved effectively, and a transaction operation can be simplified.

The financial transaction management method provided by a specific embodiment further comprises following steps:
S71, by the client terminal 10, receiving an account opening request inputted by the user, and transmitting the account opening request to the server 20. The account opening request includes the common account information and the qualification certificate documents corresponding to the common account information. Wherein, the common account information includes the common account and the common account passcode; it can be understood that, in the account opening process, it still needs to store identity information used for solely identifying the identity of the user such as the user name, the identity number, the mailbox, the telephone, and so on in association with the common account information, in this way, when the user forgets the common account information, he/she can find the common account and/or common account passcode based on the identity information. In this embodiment, the qualification certificate documents include the document used for certifying identity information such as a scanned document of an identity card, etc.
S72, by the server 20, receiving the account opening request, and storing the account opening request (including the common account information and the corresponding qualification certificate documents) in the user database. The server 20 can receive account opening requests inputted by many users, and store account opening request of each of users in the user database, each account opening request is associated with the identity information such as the identity card, when the account opening request is stored in the user database, it is stored based on the identity information such as the identity card, such that an uniqueness of the account opening request is ensured. In an embodiment, when the account opening is performed based on the account opening request, an account association information is established based on the common account information in the account opening request, this account association information is associated with the qualification certificate documents.

It can be understood that, the user transmits the account opening request to the server 20 through the client terminal 10 so as to transmit the common account information and qualification certificate documents, thereby accomplishing the process of account opening based on the common account information; in this way, when the user performs the financial transaction, he/she can login the financial transaction management system based on the common account information and accomplish the transaction. In an embodiment, the common account information consisted of the common account and the common account passcode can be used to login the financial transaction management system, a method of using an identity card number and a mobile phone verification code can also be used to login the financial transaction management system, thereby ensuring a diversity of login of the financial transaction management system, and thereby avoiding a failure to login due to forgetting of the common account information.

The financial transaction management method provided by another specific embodiment further comprises the following steps:
S81: by the client terminal 10, receiving the account opening request inputted by the user, and transmitting the account opening request to the server 20. Wherein, the account opening request includes the common account information, at least one of the dedicated account information and the qualification certificate documents. Wherein, the common account information includes the common account and the common account passcode. The dedicated account information includes the dedicated account corresponding to the dedicated account ID and the dedicated account passcode. The qualification certificate documents not only include document used for certifying identity information, such as the scanned document of the identity card, but also include the qualification certificate documents that are required for performing a transaction with a product corresponding to the dedicated account ID such as certificate documents used for certifying identity, property, and income of the user, and so on.
S82: by the server 20, receiving the account opening request, and storing the account opening request (including the common account information and the corresponding qualification certificate documents) in the user database. The server 20 can receive account opening requests inputted by many users, and store the account opening request in the user database once it receives an account opening request from a user, each account opening request is associated with the identity information such as the identity card; when stored in the user database, the account opening request is stored based on the identity information such as the identity card, such that the uniqueness of the account opening request is ensured. In an embodiment, when the account opening is performed based on the account opening request, an account association information is established based on the common account information in the account opening request, this account association information is stored in association with at least one dedicated account information, and is associated with the qualification certificate documents.

It can be understood that, when the user transmits the account opening request to the server 20 through the client terminal 10 and stores the account opening request in the user database, since the account opening request includes the common account information, at least one dedicated account information and qualification certificate documents, when performing an account opening operation based on the account opening request, the server 20 can accomplish account opening of the common account and at least one of the dedicated account, and can receive account opening of the common account and the dedicated account, such that an account opening time-consuming can be saved, and an account opening efficiency can be improved.

In the financial transaction management method provided by another specific embodiment, after the server 20 accomplish account opening of the common account, the user can click the dedicated account adding button in a login interface of the client terminal 10 to enter a dedicated account opening interface, the user can input a dedicated account and a dedicated account passcode on the dedicated account opening interface, and upload the qualification certificate documents corresponding to the dedicated account so as to input a dedicated account opening request. After receiving the dedicated account opening request inputted by the user, the server 10 transmits the dedicated account opening request to the server 20. The server 20 receives the dedicated account opening request and transmits the dedicated account opening request in the user database, thereby accomplishing the account opening of the dedicated account. In this embodiment, when performing the account opening of the dedicated account, there is no need to upload the common account information that is required by the account opening of the common account, and the corresponding qualification certificate documents repeatedly; however, it only needs to input the dedicated account information and the corresponding dedicated qualification certificate documents, the account opening operation process is simple and convenient, an efficiency of account opening of the dedicated account can be improved, and an account opening time-consuming of multiple accounts can be saved.

In one specific embodiment, the financial transaction management method further comprises following steps:
S91: by the client terminal 10, receiving an account importing request inputted by the user and transmitting the account importing request to the server 20. The account importing request is associated with the common account information, and includes the dedicated account information and the dedicated qualification certificate documents. Wherein, the account importing request is referred to as importing the opened dedicated account information into the financial transaction management system, thereby making the dedicated account information be stored in association with the common account information after the account opening of the dedicated account has been accomplished in advance in the savings system, the loans system, the fund system, the security system, the group entrusting system, the capital management system, the insurance system and the financial management system.
S92: by the server 20, receiving the account importing request, and storing the account importing request in the user database, such that the dedicated account information can be stored in association with the dedicated qualification certificate documents. The server 20 can receive multiple account importing requests inputted by any user, store the dedicated account information in the multiple account importing requests and the dedicated qualification certificate documents in the user database, and make the common account information be associated with at least one dedicated account information and the dedicated qualification certificate documents corresponding to the at least one common account information.

In this embodiment, the user can input the account importing request into the server 20 through the client terminal 10, such that the dedicated account information in the account importing request and the qualification certificate documents corresponding to the dedicated account information can be stored in the user database, and be stored in association with the common account information in the user database, thereby being able to be directly invoked when a financial transaction is performed. It can be understood that, when the user performs account opening of some other dedicated account through the client terminal 10, there is no need to input the dedicated account information and the dedicated qualification certificate documents corresponding to the dedicated account information repeatedly, which have been inputted into the user database via the account importing request, in this way, time spent on account opening of the dedicated account can be saved effectively, and the efficiency of account opening can be improved.

In a financial transaction management method, if a user A performs an account opening in the financial transaction management system, in the account association table stored in the user database, in the user account association information of a user A, the common account is XXX, the corresponding common account passcode is 000001; and a security dedicated account opened by a client A in a security system in advance is YYY, a corresponding security dedicated account passcode is 000002; a financial management account opened in the financial management system in advance is ZZZ, a corresponding financial management dedicated account passcode is 000003; the security dedicated account YYY and the financial management dedicated account ZZZ, and the common account XXX are associated and stored. Supposing that, in the financial transaction management system, dedicated account IDs corresponding to financial transaction types such as savings, loans, fund, security, group entrusting, capital management, insurance and financial management, and so on are set to be 001, 002, 003, 004, 005, 006, 007 respectively.

Taking a security transaction for example, if user A wants to purchase ten thousand stocks of Ping An bank with the stock code of [000001], the user A can login the financial transaction management system on the client terminal 10 based on the common account information, and transmit the account login request to the server 20 through the client terminal 10, the common account of the account login information is XXX, the common account passcode is 000001, the dedicated account ID is 004. When receiving the account login request, the server 20 searches whether the financial transaction management system stores the security dedicated account corresponding to the dedicated account ID of 004 stored in association with the common account information. Since the account association table of the server 20 stores the security dedicated account YYY associated with the common account XXX, when the server 20 receives the account login request, it can transmit the first control signal to the client terminal, such that the client terminal 10 can enter the security dedicated account interface; by transmitting the first transaction request to the server 20 through the client terminal 10, the server 20 can accomplish a corresponding stock transaction based on the first transaction request.

Taking an insurance purchase for example, if the user A wants to purchase a car loan, the user A can login the financial transaction management system on the client terminal 10 based on the common account information, and transmit the account login request to the server 20 through the client terminal 10, the common account of the account login information is XXX, the common account passcode is 000001, the dedicated account ID is 006. When receiving the account login information, the server 20 searches whether the financial transaction management system stores an insurance dedicated account corresponding to the dedicated account ID of 006 stored in association with the common account information. Since the account association table of the server 20 doesn't store the corresponding insurance dedicated account, thus, when the server 20 receives the account login request, it transmits the second control signal to the client terminal 10, such that the client terminal 10 can enter the common account interface, and accomplish a car loan transaction on the common account interface. In an embodiment, the user can transmit the second transaction request to the server 20 through the client terminal 10 on the common account interface, such that the server 20 can accomplish the corresponding car loan transaction based on the second transaction request.

In the financial transaction management method provided by this embodiment, the server 20 judges whether there exists the dedicated account corresponding to the dedicated account ID so as to determine whether the user has performed the account opening operation of the dedicated account corresponding to the dedicated account ID in advance. The server 20 is further configured to control the client terminal 10 to jump onto the dedicated account interface corresponding to the dedicated account directly when the dedicated account is stored, and accomplish the transaction on the dedicated account interface, such that the user can accomplish the transaction on the client terminal 10 based on the opened dedicated account, there is no need to login the dedicated account interface through the dedicated account, the operation process is simple and convenient, login time of different dedicated accounts can be saved effectively, and the financial risk of failing to login the dedicated account interface so as to perform the transaction timely due to forgetting of the dedicated account and/or the dedicated account passcode can be avoided. The server 20 is further configured to jump onto the common account interface corresponding to the common account when the dedicated account isn't stored in advance, and accomplish the transaction based on the common account interface, there is no need to accomplish account opening operations of multiple dedicated accounts in advance, transactions of financial business can still be accomplished on the common account interface, the problem of low efficiency and long time-consuming due to repeated account opening of multiple dedicated accounts can be avoided from occurring.

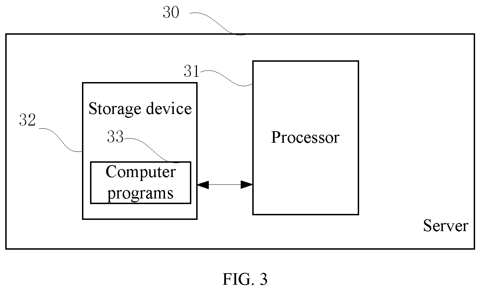

FIG. 3 illustrates a server provided by one embodiment of the present invention. As shown in FIG. 3, the server 3 in this embodiment comprises: a processor 30, a storage device 31 and computer program 32 stored in the storage device 31 and executable on the processor 30 such as the programs for executing the aforesaid financial transaction management method. The processor 30 implements the steps in the aforesaid various embodiments of the financial transaction management method, such as the steps S1-S6 depicted in FIG. 2, when executing the computer program 32. Or as an alternative, the processor 30 implements functionalities of various modules/units in the aforesaid various device embodiments when executing the computer program 32.

Illustratively, the computer program 32 can be divided into one or more modules/units, the one or more modules/units are stored in the storage device 31, and are executed by the processor 30 so as to implement the present invention. The one or more modules/units can be a series of computer program instruction segments that can implement specific functionalities, these instruction segments are used for describing an executive process of the computer program 32 in the server 3.

The server 3 can be a computing device such as a local server, a cloud server, etc. The server 3 can include but is not limited to the processor 30, the storage device 31. It can be understood by one of ordinary skill in the art that, FIG. 3 is an example of the server merely, but should not be regarded as limitation to the server 3, the server 3 can include components more or less than the components shown in the figures, or some components can be combined, or different components can be combined; for example, the server can also include an input and output device, a network access device, a bus, etc.

The processor 30 can be a CPU (Central Processing Unit), and can also be other general purpose processor, DSP (Digital Signal Processor), ASIC (Application Specific Integrated Circuit), FGPA (Field-Programmable Gate Array), or be some other programmable logic devices, discrete gate or transistor logic devices, discrete hardware components, etc. The general purpose processor can be a MCU (Micro Processing Unit), or alternatively, the processor can also be any conventional processor, etc.

The storage device 31 can be an internal storage unit of the server 3, such as a hard disk or a memory of the server 3. The storage device 31 can also be an external storage device of the server 3, such as a plug-in hard disk, a SMC (Smart Media Card), a SD (Secure Digital) card, a FC (Flash Card) equipped on the server 3. Furthermore, the storage device 31 may include both the internal storage unit and the external storage device of the server 3, either. The storage device 31 is configured to store the computer programs, and other procedures and data needed by the server 3. The storage device 31 can also be configured to store data that has been output or being ready to be output temporarily.

The present invention has been explained with reference to the above-described embodiments, it should be understood for the one of ordinary skill in the art that, various transformations and equivalent replacements can also be performed for the present invention without breaking away from the protection scope of the present invention. In addition, aiming at particular situation or specific condition, various amendments can be made for the present invention, and these amendments don't go beyond the scope of the present invention. Therefore, the present invention isn't restricted by the published specific embodiments, but should be included in all embodiments in the range of the claims of the present invention.

## Claims

1. A financial transaction management system comprising a client terminal and a server; wherein:
the client terminal is configured to receive an account login request inputted by a user, and transmit the account login request to the server; wherein the account login request comprises common account information and a dedicated account ID;
the server is configured to receive the account login request, and judge whether there exists a dedicated account corresponding to the dedicated account ID, and to transmit a first control signal to the client terminal when there exists the dedicated account;
the client terminal is further configured to receive the first control signal and enter a dedicated account interface according to the first control signal, receive a first transaction request inputted by the user and transmit the first transaction request to the server; the first transaction request includes the dedicated account information and the transaction information associated with the dedicated account ID;
the server is further configured to receive the first transaction request, and to accomplish a transaction based on the first transaction request.

2. The financial transaction management system according to claim 1, wherein:
the server is configured to transmit a second control signal to the client terminal when there does not exist the dedicated account corresponding to the dedicated ID;
the client terminal is configured to receive the second control signal and enter a common account interface according to the second control signal, to receive a second transaction request inputted by the user and transmit the second transaction request to the server; the second transaction request includes the common account information and the transaction information associated with the dedicated account ID;
the server is configured to receive the second transaction request, and accomplish the transaction based on the second transaction request.

3. The financial transaction management system according to claim 2, wherein the transaction information comprises: a product ID; and wherein accomplishing the transaction based on the second transaction request comprises:
judging whether a product corresponding to the product ID in the second transaction request is a dedicated product;
if the product corresponding to the product ID is the dedicated product, judging whether qualification certificate documents corresponding to the specific product are stored;
if the qualification certificate documents are not stored, transmitting a supplementary document instruction to the client terminal, receiving the qualification certificate documents uploaded by the client terminal based on the supplementary document instruction, and accomplishing the transaction corresponding to the second transaction request based on the common account information; and
accomplishing the transaction corresponding to the second transaction request based on the common account information if there exist the qualification certificate documents or the product corresponding to the product ID isn't the dedicated product.

4. The financial transaction management system according to claim 3, wherein:
the client terminal is configured to receive an account opening request inputted by the user, and transmit the account opening request to the server; wherein the account opening request includes the common account information and/or at least one of the dedicated account information, and further includes the qualification certificate documents;
the server is configured to receive the account opening request, and store the account opening request in a user database.

5. The financial transaction management system according to claim 4, wherein:
the client terminal is configured to receive an account importing request, and transmit the account importing request to the server; wherein the account importing request is associated with the common account information, and comprises the dedicated account information and the dedicated qualification certificate documents;
the server is configured to receive the account importing request, and store the account importing request in the user database, so that the dedicated account information and the dedicated qualification certificate documents are stored in association with the common account information.

6. A financial transaction management method comprising:
receiving, via a client terminal, an account login request inputted by a user, and transmitting the account login request to a server; wherein the account login request comprises common account information and dedicated account ID;
receiving the account login request via the server, and judging whether there exists a dedicated account corresponding to the dedicated account ID, and transmitting a first control signal to the client terminal when there exists the dedicated account;
receiving the first control signal via the client terminal and entering a dedicated account interface according to the first control signal, receiving a first transaction request inputted by the user and transmitting the first transaction request to the server; wherein the first transaction request includes the dedicated account information and transaction information associated with the dedicated account ID; and
receiving the first transaction request via the server, and accomplishing a transaction based on the first transaction request.

7. The financial transaction management method according to claim 6, further comprising:
transmitting a second control signal to the client terminal via the server when there doesn't exist the dedicated account corresponding to the dedicated ID;
receiving the second control signal via the client terminal and entering a common account interface according to the second control signal, receiving a second transaction request inputted by the user and transmitting the second transaction request to the server; wherein the second transaction request includes the common account information and the transaction information associated with the dedicated account ID; and
receiving the second transaction request via the server, and accomplishing the transaction based on the second transaction request.

8. The financial transaction management method according to claim 7, wherein the transaction information comprises a product ID, the method further comprises:
judging whether a product corresponding to the product ID in the second transaction request is a dedicated product;
judging whether qualification certificate documents corresponding to the specific product are stored if the product corresponding to the product ID is the dedicated product;
transmitting a supplementary document instruction to the client terminal, receiving the qualification certificate documents uploaded by the client terminal based on the supplementary document instruction, and accomplishing the transaction corresponding to the second transaction request based on the common account information if the qualification certificate documents aren't stored; and
accomplishing the transaction corresponding to the second transaction request based on the common account information if there exist the qualification certificate documents or the product corresponding to the product ID isn't the dedicated product.

9. The financial transaction management method according to claim 8, further comprising:
receiving, via the client terminal, an account opening request inputted by the user, and transmitting the account opening request to the server; wherein the account opening request includes the common account information and/or at least one of the dedicated account information, and further includes the qualification certificate documents; and
receiving the account opening request via the server, and storing the account opening request in a user database.

10. The financial transaction management method according to claim 9, further comprising:
receiving an account importing request via the client terminal, and transmitting the account importing request to the server; wherein the account importing request is associated with the common account information, and comprises the dedicated account information and the dedicated qualification certificate documents; and
receiving the account importing request via the server, and storing the account importing request in the user database, so that the dedicated account information and the dedicated qualification certificate documents are stored in association with the common account information.

11. A server comprising a storage device, a processor and computer program stored in the storage device and executable by the processor, wherein the server is configured to communicate with a client terminal, the processor implements following steps when the computer program is executed:
receiving, via the client terminal, an account login request inputted by a user, and transmitting the account login request to a server; wherein the account login request comprises common account information and dedicated account ID;
receiving the account login request via the server, and judging whether there exists a dedicated account corresponding to the dedicated account ID, and transmitting a first control signal to the client terminal when there exists the dedicated account;
receiving the first control signal via the client terminal and entering a dedicated account interface according to the first control signal, receiving a first transaction request inputted by the user and transmitting the first transaction request to the server; wherein the first transaction request includes the dedicated account information and transaction information associated with the dedicated account ID;
receiving the first transaction request via the server, and accomplishing a transaction based on the first transaction request.

12. The server according to claim 11, further comprising:
transmitting a second control signal to the client terminal via the server when there doesn't exist the dedicated account corresponding to the dedicated ID;
receiving the second control signal via the client terminal and entering a common account interface according to the second control signal, receiving a second transaction request inputted by the user and transmitting the second transaction request to the server; wherein the second transaction request includes the common account information and the transaction information associated with the dedicated account ID;
receiving the second transaction request via the server, and accomplishing the transaction based on the second transaction request.

13. The server according to claim 11, wherein the transaction information comprises a product ID;
wherein accomplishing the transaction based on the second transaction request comprises:
judging whether a product corresponding to the product ID in the second transaction request is a dedicated product;
judging whether qualification certificate documents corresponding to the specific product are stored if the product corresponding to the product ID is the dedicated product;
transmitting a supplementary document instruction to the client terminal, receiving the qualification certificate documents uploaded by the client terminal based on the supplementary document instruction, and accomplishing the transaction corresponding to the second transaction request based on the common account information if the qualification certificate documents aren't stored; and
accomplishing the transaction corresponding to the second transaction request based on the common account information if there exist the qualification certificate documents or the product corresponding to the product ID isn't the dedicated product.

14. The server according to claim 13, further comprising:
receiving, via the client terminal, an account opening request inputted by the user, and transmitting the account opening request to the server; wherein the account opening request includes the common account information and/or at least one of the dedicated account information, and further includes the qualification certificate documents; and
receiving the account opening request via the server, and storing the account opening request in a user database.

15. The server according to claim 14, further comprising:
receiving an account importing request via the client terminal, and transmitting the account importing request to the server; wherein the account importing request is associated with the common account information, and comprises the dedicated account information and the dedicated qualification certificate documents; and
receiving the account importing request via the server, and storing the account importing request in the user database, so that the dedicated account information and the dedicated qualification certificate documents are stored in association with the common account information.

16. A computer readable storage medium which stores computer program, wherein when the computer program is executed by a processor, following steps are implemented:
receiving, via a client terminal, an account login request inputted by a user, and transmitting the account login request to a server; wherein the account login request comprises common account information and dedicated account ID;
receiving the account login request via the server, and judging whether there exists a dedicated account corresponding to the dedicated account ID, and transmitting a first control signal to the client terminal when there exists the dedicated account;
receiving the first control signal via the client terminal and entering a dedicated account interface according to the first control signal, receiving a first transaction request inputted by the user and transmitting the first transaction request to the server; wherein the first transaction request includes the dedicated account information and transaction information associated with the dedicated account ID; and
receiving the first transaction request via the server, and accomplishing a transaction based on the first transaction request.

17. The computer readable storage medium according to claim 16, further comprising:
transmitting a second control signal to the client terminal via the server when there doesn't exist the dedicated account corresponding to the dedicated ID;
receiving the second control signal via the client terminal and entering a common account interface according to the second control signal, receiving a second transaction request inputted by the user and transmitting the second transaction request to the server; wherein the second transaction request includes the common account information and the transaction information associated with the dedicated account ID; and
receiving the second transaction request via the server, and accomplishing the transaction based on the second transaction request.

18. The computer readable storage medium according to claim 16, wherein the transaction information comprises a product ID, and wherein accomplishing the transaction based on the second transaction request comprises:
judging whether a product corresponding to the product ID in the second transaction request is a dedicated product;
judging whether qualification certificate documents corresponding to the specific product are stored if the product corresponding to the product ID is the dedicated product;
transmitting a supplementary document instruction to the client terminal, receiving the qualification certificate documents uploaded by the client terminal based on the supplementary document instruction, and accomplishing the transaction corresponding to the second transaction request based on the common account information if the qualification certificate documents aren't stored; and
accomplishing the transaction corresponding to the second transaction request based on the common account information if there exist the qualification certificate documents or the product corresponding to the product ID isn't the dedicated product.

19. The computer readable storage medium according to claim 18, further comprising:
receiving, via the client terminal, an account importing request inputted by the user, and transmitting the account importing request to the server; wherein the account opening request includes the common account information and/or at least one of the dedicated account information, and further includes the qualification certificate documents; and
receiving the account importing request via the server, and storing the account importing request in a user database.

20. The computer readable storage medium according to claim 19, further comprising:
receiving an account importing request via the client terminal, and transmitting the account importing request to the server; wherein the account importing request is associated with the common account information, and comprises the dedicated account information and the dedicated qualification certificate documents; and
receiving the account importing request via the server, and storing the account importing request in the user database, so that the dedicated account information and the dedicated qualification certificate documents are stored in association with the common account information.
